# NEW EUROPEAN PATENT SPECIFICATION

(11) **EP 2 269 448 B2**
(45) Date of publication and mention of the opposition decision: **31.05.2017**
(45) Mention of the grant of the patent: 22.01.2014
(21) Application number: 10167874.6
(22) Date of filing: 30.06.2010
(51) Int. Cl.: A01M 1/10

(54) **Insect trap**
Insektenfalle
Piège à insectes

(30) Priority: 02.07.2009 GB 0911484
(43) Date of publication of application: 05.01.2011
(73) Proprietor: P & L Systems Limited, Knaresborough North Yorkshire HG5 8PJ (GB)
(72) Inventor: Holmes, Tom, Knaresborough, North Yorkshire HG5 8QB (GB)
(74) Representative: Appleyard Lees IP LLP

(56) References cited:
- EP-A2- 0 659 339
- EP-A2- 0 947 134
- WO-A1-95/31896
- US-A- 4 442 624
- US-A- 5 384 981

## Description

The invention relates to an insect trap. Particularly, but not exclusively, the invention relates to an insect trap incorporating immobilisation means for immobilising flying insects. The invention further relates to immobilisation means for an insect trap.

Insect traps for catching flying insects are known. Such traps often include a lure for attracting the insects, for example, a UV light source, or a pheromone. Once attracted, the insects are often immobilised or trapped on a substrate to which an adhesive material has been applied. Such immobilisation means are often referred to as "glueboards". Such a trap is known from e.g. WO 95/31896.

Glueboards have been widely used as a more discreet and hygienic method of removing flying insects from the local environment in comparison to traditional "zapper" units. Commonly known glueboards comprise a simple flat substrate, cut to shape to fit into the specific design of insect trap, being placed behind or in close proximity to a UV light source in the trap. It is known that flying insects have an increased tendency to land in close proximity to the UV light source. The result of this phenomenon is that a significant number of 'dead areas' are created on the glueboard, where a minimal number of flies are caught. As a result, a significant area of the glueboard is left unused.

In order to attempt to mitigate the effect of 'dead areas', it is known to provide a glueboard which is circular or concave in shape, facilitating an equidistance between the light tube and the glueboard. However, disadvantageously, in order to provide a relationship of proportional equidistance between the light tube and the glueboard, only one UV tube can be used in the apparatus. This is a particular disadvantage because it is well known that a plurality of light tubes is required to achieve an increased efficacy in luring the flying insects to the glueboard.

It is an object of the invention to provide an insect trap which aims to overcome the aforementioned problems.

According to an aspect of the present invention there is provided an insect trap as defined in claim 1.

Preferably, the immobilisation means comprises a longitudinal axis.

The immobilisation means comprises a plurality of preformed folding regions. Preferably, the at least one preformed folding region, and preferably the plurality of preformed folding regions, extend across the immobilisation means, preferably substantially parallel to, and/or preferably coaxially, and/or preferably coplanar, with the longitudinal axis of the immobilisation means. The preformed folding region/s may extend perpendicular to the longitudinal axis. Preferably, six preformed folding regions are provided on the immobilisation means.

Preferably, the preformed folding regions are substantially between 20mm and 120mm apart from each other. Preferably, the preformed folding regions are substantially between 50mm and 80mm apart from each other.

Preferably, a first preformed folding region is substantially between 20 and 30mm from a first side wall, most preferably substantially 24mm.

Preferably, a second preformed folding region is substantially between 70 and 80mm from the first side wall, most preferably 74mm.

Preferably, a third preformed folding region is substantially between 145 and 155mm from the first side wall, most preferably 153mm.

Preferably, a fourth preformed folding region is substantially between 190 and 210mm from the first side wall, most preferably 202mm.

Preferably, a fifth preformed folding region is substantially between 240 and 260mm from the first side wall, most preferably 251 mm.

Preferably, a sixth preformed folding region is substantially between 320 and 350mm from the first side wall, most preferably 331 mm.

Preferably, the preformed folding regions comprise pre-cut perforations. The preformed folding regions may be score lines, may be marks suggesting the position of a fold.

Preferably, the immobilisation means comprises a first side wall, preferably a second side wall, preferably a third side wall, and preferably a fourth side wall. Preferably, the first and second side walls are substantially parallel to each other. Preferably, the third and fourth side walls are substantially parallel to each other. Preferably, the third and fourth side walls are substantially perpendicular to the first and/or second side walls.

Preferably, a notch is provided in the first side wall. Preferably, the notch is "V" shaped and preferably is downwardly pointing away from the first side wall. Advantageously, the notch arrangement serves as an indicator to guide the user to place the immobilisation means in the correct orientation in the insect trap. Provision of the notch minimises the risk of said means being incorrectly placed into the trap.

Preferably, a first cut-out is provided in the third side wall and preferably, a second cut-out is provided on the fourth side wall. Preferably, the first cut-out is of substantially the same dimension to the second cut-out. Preferably, the first cut-out and preferably the second cut-out is substantially symmetrical about the longitudinal axis of the insect trap. Preferably, two preformed folding regions are located adjacent the cut-outs.

Preferably, the immobilisation means is substantially symmetrical about a first axis. Preferably, the first axis is substantially perpendicular to the longitudinal axis. Preferably, the first cut-out and preferably the second cut-out are located substantially symmetrically opposite each other.

Preferably, the immobilisation means, preferably the adhesive area of said means has a surface area between substantially 1000cm² and 2000cm², most preferably between substantially 1400 and 1500cm², most preferably substantially 1415cm².

Preferably, the adhesive material is specialist pheromone impregnated UV glue.

Preferably, a sheet is provided on the immobilisation means. Preferably, the sheet is substantially rectangular in plan view. Preferably, in a fist position, the sheet substantially covers the cross sectional area of the adhesive.

The arrangement provides an immobilisation means which is substantially rectangular in front view, and comprises a pair of cut-outs located on the third and fourth side walls.

Preferably, a lip is provided on the immobilisation means. Preferably, the lip extends around the first side wall, and/or preferably the second side wall, and/or preferably the third side wall, and/or preferably, the fourth side wall. Preferably, the lip is between substantially 10mm and 25mm in length.

Preferably, an insect attracting means is provided on the insect trap. The insect attracting means may comprise a pheromone lure.

Preferably, the insect attracting means comprises an illumination means. Preferably, the illumination means comprise a UV light source, preferably a UV-A light source. The illumination means may comprise a plurality of light tubes, preferably UV light tubes. Preferably, the or each light tube is arranged substantially parallel to a longitudinal axis of the insect trap, preferably, a front portion of said trap, preferably in a spaced arrangement. The or each light may be arranged perpendicular to the longitudinal axis of the trap. Preferably, the or each light tube emits light having a wavelength 350nm to 370nm.

The insect trap comprises a channel. The channel comprises two channel sections, said sections located substantially symmetrically opposite each other on the insect trap. Preferably, the channel sections are of the same configuration. The channel sections comprises an inlet for receiving the immobilisation means. Preferably, said inlet is located adjacent an opening in the insect trap. Preferably, the channel sections extends substantially the length of the insect trap.

The channel sections comprise a first trough, preferably located adjacent the inlet. The channel sections comprise a peak, preferably located adjacent the first trough. The channel sections comprises a second trough. Preferably, the second trough is located adjacent the peak. Preferably, the peak is located in-between the first and second said troughs. An outlet is provided in the channel sections. Preferably, the outlet is located adjacent the second trough.

Provision of the channel comprising troughs and a peak ensures that the immobilisation means is deformed into the desirable shape in the insect trap. Specifically, the preformed folding regions deform in the region of the troughs and peak such that the immobilisation means advantageously folds into a configuration which creates increased surface area for retaining insects. The provision of said regions, together with the channel, ensures that the number of "dead areas" on the immobilisation means are minimised.

Advantageously, the immobilisation means is adapted to locate in the insect trap in such a position as to minimise the variation in distance between the attracting means and the immobilisation means. In so doing, the risk of "dead areas" being created on the immobilisation means is minimised and so there is less wastage of the immobilisation means.

Advantages of the glueboard being naturally flat rather than pre-folded include improved simplicity of manufacture, a reduction in packaging material; and reduced storage space requirements, both in storage and transit. The glueboard may however be pre-folded into the desired form.

In a further aspect, the invention provides immobilisation means for an insect trap as defined in claim 8.

In a further aspect, the invention provides an assembly as defined in claim 9.

In a further aspect, the invention provides a method of assembling an insect trap as defined in claim 10.

All of the features described herein may be combined with any of the above aspects, in any combination.

An embodiment of the invention will now be described, by way of example only, with reference to the accompanying drawings, wherein:
Figure 1 shows a schematic perspective view of an insect trap according to the invention;
Figure 2 shows a schematic perspective view of an insect trap according to the invention;
Figures 3a and 3b show schematic perspective side views of corresponding parts of an insect trap according to the invention;
Figures 4a and 4b show a schematic perspective front view and a schematic side view respectively of immobilisation means according to the invention;
Figures 5a and 5b show a schematic perspective front view and a schematic side view respectively of immobilisation means according to the invention;
Figure 6 shows a schematic perspective view of an insect trap according to the invention;
Figure 7 shows a schematic perspective side view of a part of an insect trap according to the invention; and
Figure 8 shows an immobilisation means according to the invention.

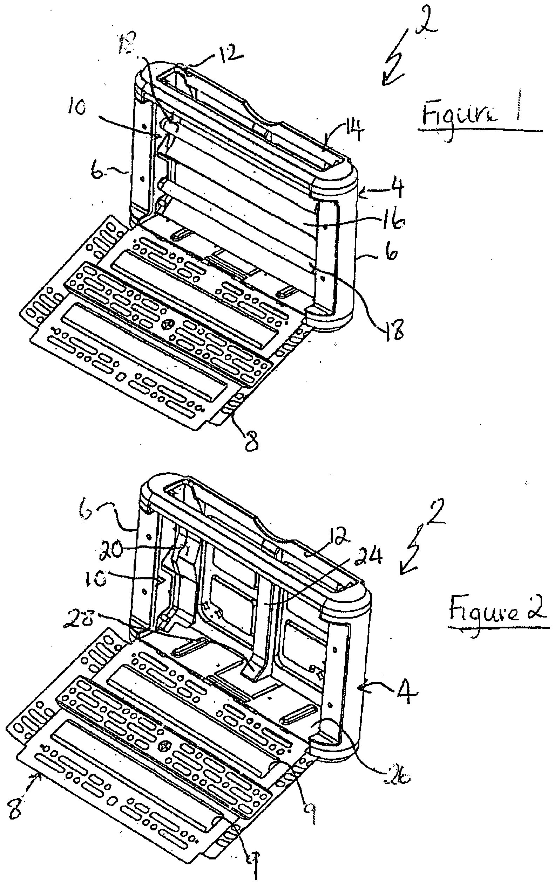

Figure 1 shows an insect trap 2 according to the invention. The insect trap 2 comprises a body 4 which is generally rectangular in front view having curved side walls 6. A cover 8 is releasably attached to the body 4. In Figure 1, the cover 8 is in an open configuration, to allow access to an inner part 10 of the body 4. The cover 8 comprises windows 9 which align with light tubes 18 when the cover 8 is in a closed configuration. An immobilisation means 16 is located in the insect trap 2 of Figure 1.

An opening 12 is provided in an upper portion 14 of the body 4 of the insect trap 2. The opening 12 is dimensioned to allow the immobilisation means 16 to pass through the opening 12 and into the inner part 10 of the body 4. UV-A light tubes 18 (two shown at Figure 1) are provided on the body 4. Said light tubes 18 are fitted so as to extend parallel with the longitudinal axis of the insect trap 2.

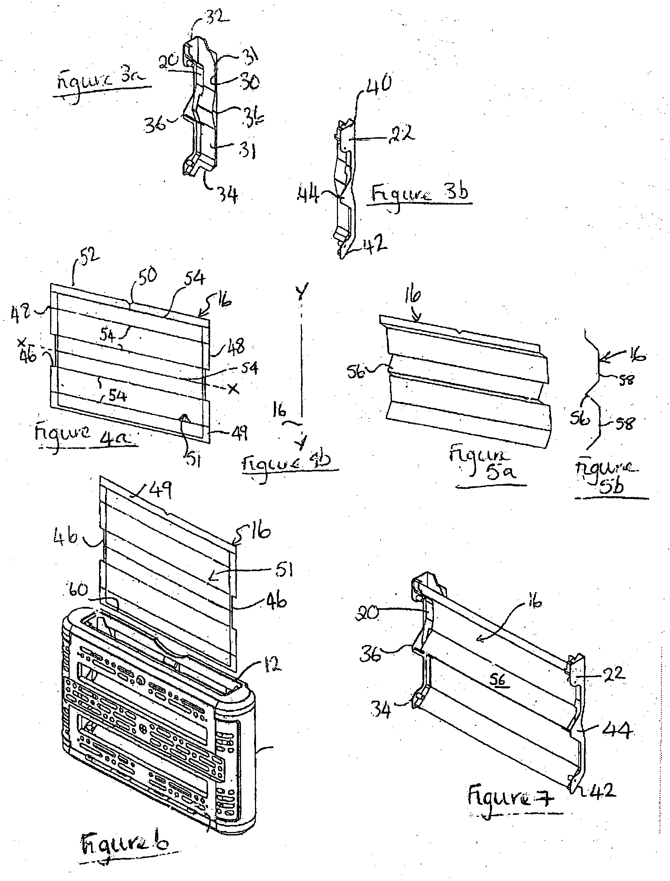

Figure 2 shows the inner part 10 of the insect trap 2 in greater detail without the immobilisation means 16 or light tubes 18 in position. The inner part 10 comprises corresponding receiving portions 20, 22 located adjacent side walls 6. The first receiving portion 20 and the second receiving portion 22 will be described in relation to Figures 3a and 3b. A guide member 24 is provided centrally of the inner part 10. The guide member 24 extends from the opening 12 to a base 26 of the body 4. The guide member 24 is located substantially centrally of the inner part 10 and perpendicular to the longitudinal axis of the insect trap 2. A foot 28 extends from the guide member 24 to lay adjacent the base 26.

The first receiving portion 20 is shown in Figure 3a. The first receiving portion comprises a channel 30. The channel 30 extends from an upper portion 32 to a lower portion 34 of the first receiving portion 20. The channel 30 extends inwardly towards a rear part of the body 4 to form a trough 31 and then extends outwardly to a central part or peak 36. The channel 30 then extends inwardly to lay adjacent the body 4, to form a trough 31, before extending outwardly adjacent the lower portion 34.

Figure 3b shows the second receiving portion 22. The second receiving portion 22 comprises corresponding parts to those of the first receiving portion 20. Specifically, the second receiving portion comprises a corresponding channel 38 having an upper portion 40 and a lower portion 42. The channel 38 is dimensioned to mimic the geometry of channel 30, such that a central part or peak 44 is formed on the second receiving portion 22.

Figures 4 and 5 show the immobilisation means 16 in greater detail. Figure 4a and 4b show the immobilisation means 16 in a first position in which said means 16 is substantially flat. Figures 5a and 5b show the immobilisation means 16 in a second "operating" position.

The immobilisation means 16 is generally rectangular in front view having cut outs 46 located on edges 48. A lip 49 is provided around the edge of the immobilisation means 16. A notch 50 is provided on an upper edge 52. A cover or sheet 51 is located over an area of the body of the immobilisation means 16. The sheet 51 covers an adhesive area of said means 16 during transit. In use, the user peels back the sheet 51 to reveal the adhesive are before placing the immobilisation means 16 in the insect trap 2.

The immobilisation means 16 is symmetrical about both an axis marked X-X and an axis marked Y-Y in Figures 4a and 4b. A plurality of preformed fold lines 54 are provided on the immobilisation means 16. The fold lines 54 may comprise perforations or weak points along the immobilisation means 16 to allow said means 16 to bend in the location of the fold lines 54 when a downward pressure is exerted on the immobilisation means, particularly when said means 16 is placed in the channel 30.

Figures 5a and 5b show the immobilisation means 16 in an operating configuration. In this configuration, said means 16 is deformed to create a V shaped peak 56. The peak 56 projects outwardly from the means 16. As is shown in Figure 5b, the immobilisation means 16 is bent in such a manner as to create troughs 58 which extend rearwardly from the immobilisation means 16. When the immobilisation means 16 is located in the channel 30, the troughs 58 lay adjacent the troughs 31 in the channel 30.

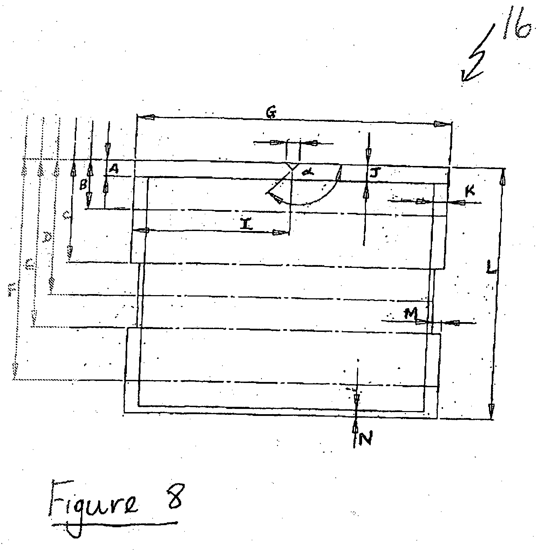

Figure 8 shows the immobilisation in greater detail. The distances referenced in the figure are listed in Table 1 below. The angle α is substantially 135°.

**Table 1**

| Reference | Distance (mm) |
|---|---|
| A | 24 |
| B | 73 |
| C | 153 |
| D | 202 |
| E | 251 |
| F | 331 |
| G | 450 |
| H | 20 |
| I | 225 |
| J | 25 |
| K | 20 |
| L | 380 |
| M | 13 |
| N | 10 |

In use, the immobilisation means, which is substantially flat in the first configuration, is received by the opening 12 in the insect trap 2. This is as shown in Figure 6. A leading edge 60 of the immobilisation means 16 is offered into the opening 12 to be received by the upper portions 32, 40 of the first and second receiving portions 20, 22. The immobilisation means 16 is pushed downwardly by the user, so that said means passes down and through the channel 30, 38 to the lower portion 34, 42. The process of pushing said means 16 inside the insect trap 2, encourages said means 16 to deform in the preformed folding regions, to achieve the desired form. In so doing, the immobilisation means 16 is quickly and simply transformed from a flat member into a formed shape that is a triangular based repeated form, providing a broadly equidistant relationship between the immobilisation means 16 and the light tubes 18. This is shown most clearly in Figure 7. The foot 28 on the insect trap 2 encourages the immobilisation means 16 to flare and prevents said means from bowing backwards.

The fold lines 54 may take the form of pre-cut perforations, score lines, or marks suggesting the position of a fold. The advantage of the immobilisation means 16 being naturally flat rather than moulded and formed into a bended configuration, include improved simplicity of manufacture, a reduction in packaging material used and a reduced storage space requirement, both in storage and in transit. However, it will be envisaged that alternatively, the immobilisation means 16 may be preformed to achieve the desired form.

The immobilisation means 16 may be manufactured from card, plastic, metal, composites or other materials that provide the appropriate base with which to apply a tacky or adhesive face and to achieve the desired form.

Advantageously, provision of a glueboard which can be inserted and replaced quickly and simply with little opportunity for error, ensures that the replacement of said glueboard is as simple and efficient as possible.

In the embodiment shown in the Figures, the immobilisation means 16 comprises two "C shaped" glueboard sections in a position of equidistance from two UV light tubes 18. However, it will be understood that an alternative embodiment of the invention would include an immobilisation means comprising multiple "C sections" in direct relationship to the number of UV light tubes in an insect trap. Similarly, different shapes of glueboard and glueboard channels are envisaged that would create broadly the same effect across differing sources of insect lures, such as circular UV tubes, sources of food, insect pheromone etc.

The invention provides an insect trap 2 comprising a removable and replaceable immobilisation means which is more effective than known insect traps comprising glueboards. It is known that flying insects prefer to land on edges rather than flat surfaces. As such, the peaks 56, edges 48, 52 of the immobilisation means 16 created by forming the glueboard into C sections, further encourages the flying insects to land thereon.

It is further envisaged that other forms of glueboard may be desirable, such as a 'wave' pattern, which replicates the circular or concave form within a single glueboard. Similarly, square, ovular or other repeated forms may be created, each having preformed folding regions created thereon.

The invention provides a glueboard which minimises the risk of "dead areas" being created. The predetermined deforming nature of the board provides an increased contact area around, for example, light tubes.

The invention is not limited to the use of ultra violet fluorescent light, particularly UV light tubes, and an adhesive glue coated board, to catch and retain flying insects. It is also envisaged that other methods of attraction may be used, such as food or sex pheromone lures.

Advantageously, the immobilisation means 16 is flat prior to use which allows for ease of packaging.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The scope of the invention is defined by the appended claims.

## Claims

1. An insect trap (2) comprising a body (4) and immobilisation means (16) for immobilising and retaining insects, wherein the immobilisation means (16) comprises a plurality of preformed folding regions (54), the plurality of preformed folding regions (54) being adapted to deform under the application of a force, preferably a downwardly acting force, when said immobilisation means (16) is placed in a channel (30) of the insect trap (2),
wherein the channel (30) comprises two channel sections, said sections located substantially symmetrically opposite each other on the insect trap (2), and wherein the channel sections comprise an inlet, a first trough (31), a peak (36), a second trough (31), and an outlet,
and wherein the plurality of preformed folding regions are adapted to deform in a region of the troughs (31) and peak (36) when said immobilisation means (16) is placed in the channel (30).

2. An insect trap as claimed in claim 1, wherein the immobilisation means (16) comprises a longitudinal axis.

3. An insect trap as claimed in claim 1 or 2, wherein the plurality of preformed folding regions (54) extend substantially parallel to the longitudinal axis of the immobilisation means (16).

4. An insect trap as claimed in any one of the preceding claims, wherein the preformed folding regions (54) comprise pre-cut perforations.

5. An insect trap as claimed in any one of the preceding claims, wherein the immobilisation means comprises a first side wall, a second side wall, a third side wall, and a fourth side wall, the first and second side walls being substantially parallel to each other, and the third and fourth side walls being substantially parallel to each other.

6. An insect trap as claimed in any one of the preceding claims, wherein a notch (50) is provided in the first side wall, a first cut-out (46) is provided in the third side wall and a second cut-out (46) is provided on the fourth side wall.

7. An insect trap as claimed in any one of the preceding claims, wherein the immobilisation means (16) is substantially symmetrical about a first axis.

8. An immobilisation means for an insect trap, the immobilisation means comprising six preformed folding regions (54),
wherein:
a first preformed folding region is substantially between 20 and 30mm from a first side wall of the immobilisation means;
a second preformed folding region is substantially between 70 and 80mm from the first side wall;
a third preformed folding region is substantially between 145 and 155mm from the first side wall;
a fourth preformed folding region is substantially between 190 and 210mm from the first side wall;
a fifth preformed folding region is substantially between 240 and 260mm from the first side wall; and
a sixth preformed folding region is substantially between 320 and 350mm from the first side wall,
wherein the immobilisation means (16) is configured to deform at the six preformed folding regions to create a peak (56) projecting outwardly from the immobilisation means (16) and first and second troughs (58) extending rearwardly from the immobilisation means.

9. An assembly comprising an insect trap comprising a body (4) for receiving an immobilisation means (16) for retaining insects, the immobilisation means (16) comprising a plurality of preformed folding regions (54), the plurality of preformed folding regions (54) being adapted to deform under the application of a force, when said means (16) is placed in a channel (30) of the insect trap (2),
wherein the channel (30) comprises two channel sections, said sections located substantially symmetrically opposite each other on the insect trap, and wherein the channel sections comprise an inlet, a first trough (31), a peak (36), a second trough (31), and an outlet,
and wherein the plurality of preformed folding regions (54) are adapted to deform in a region of the troughs (31) and peak (36) when said means is placed in the channel (30),
the assembly further comprising at least one immobilisation means (16).

10. A method of assembling an insect trap (2), the method comprising inserting an immobilisation means (16), for immobilising and retaining insects, into a channel (30) of a body (4), wherein the immobilisation means (16) deforms along a plurality of preformed folding regions (54) under the application of a force applied during insertion into the channel,
wherein the channel (30) comprises two channel sections, said sections located substantially symmetrically opposite each other on the insect trap, and wherein the channel sections comprise an inlet, a first trough (31), a peak (36), a second trough (31), and an outlet,
and wherein the plurality of preformed folding regions (54) deform in a region of the troughs (31) and peak (36) when said means is placed in the channel (30).

## Patentansprüche

1. Insektenfalle (2), die einen Körper (4) und Immobilisierungsmittel (16) zum Immobilisieren und Festhalten von Insekten umfasst, wobei das Immobilisierungsmittel (16) mehrere vorgeformte Faltbereiche (54) umfasst, wobei die mehreren vorgeformten Faltbereiche (54) zum Verformen unter Anwendung einer Kraft ausgelegt sind, vorzugsweise einer nach unten wirkenden Kraft, wenn das Immobilisierungsmittel (16) in einen Kanal (30) der Insektenfalle (2) gebracht wird,
wobei der Kanal (30) zwei Kanalabschnitte umfasst, wobei die Abschnitte im Wesentlichen symmetrisch einander gegenüberliegend auf der Insektenfalle (2) angeordnet sind und wobei die Kanalabschnitte einen Einlass, einen ersten Trog (31), einen Peak (36), einen zweiten Trog (31) und einen Auslass umfassen,
und wobei die mehreren vorgeformten Faltbereiche zum Verformen in einen Bereich der Tröge (31) und des Peak (36), wenn das Immobilisierungsmittel (16) in den Kanal (30) gebracht wird, ausgelegt sind.

2. Insektenfalle nach Anspruch 1, wobei das Immobilisierungsmittel (16) eine Längsachse umfasst.

3. Insektenfalle nach Anspruch 1 oder 2, wobei die mehreren vorgeformten Faltbereiche (54) sich im Wesentlichen parallel zur Längsachse des Immobilisierungsmittels (16) erstrecken.

4. Insektenfalle nach einem der vorherigen Ansprüche, wobei die vorgeformten Faltbereiche (54) vorgeschnittene Perforationen umfassen.

5. Insektenfalle nach einem der vorherigen Ansprüche, wobei das Immobilisierungsmittel eine erste Seitenwand, eine zweite Seitenwand, eine dritte Seitenwand und eine vierte Seitenwand umfasst, wobei die erste und zweite Seitenwand im Wesentlichen parallel zueinander sind und die dritte und vierte Seitenwand im Wesentlichen parallel zueinander sind.

6. Insektenfalle nach einem der vorherigen Ansprüche, wobei eine Kerbe (50) in der ersten Seitenwand vorgesehen ist, ein erster Ausschnitt (46) in der dritten Seitenwand vorgesehen ist und ein zweiter Ausschnitt (46) in der vierten Seitenwand vorgesehen ist.

7. Insektenfalle nach einem der vorherigen Ansprüche, wobei das Immobilisierungsmittel (16) im Wesentlichen symmetrisch zu einer ersten Achse ist.

8. Immobilisierungsmittel für eine Insektenfalle, wobei das Immobilisierungsmittel sechs vorgeformte Faltbereiche (54) umfasst,
wobei:
sich ein erster vorgeformter Faltbereich im Wesentlichen zwischen 20 und 30 mm von einer ersten Seitenwand des Immobilisierungsmittels weg befindet,
sich ein zweiter vorgeformter Faltbereich im Wesentlichen zwischen 70 und 80 mm von der ersten Seitenwand weg befindet,
sich ein dritter vorgeformter Faltbereich im Wesentlichen zwischen 145 und 155 mm von der ersten Seitenwand weg befindet,
sich ein vierter vorgeformter Faltbereich im Wesentlichen zwischen 190 und 210 mm von der ersten Seitenwand weg befindet,
sich ein fünfter vorgeformter Faltbereich im Wesentlichen zwischen 240 und 260 mm von der ersten Seitenwand weg befindet; und
sich ein sechster vorgeformter Faltbereich im Wesentlichen zwischen 320 und 350 mm von der ersten Seitenwand weg befindet,
wobei das Immobilisierungsmittel (16) dazu ausgelegt ist, sich zur Erzeugung eines Peak (56), der von dem Immobilisierungsmittel (16) nach außen vorragt, und eines ersten und eines zweiten Trogs (58), die sich von dem Immobilisierungsmittel nach hinten erstrecken, an den sechs vorgeformten Faltbereichen zu verformen.

9. Baugruppe, die eine Insektenfalle umfasst, welche einen Körper (4) zum Aufnehmen eines Immobilisierungsmittels (16) zum Festhalten von Insekten umfasst, wobei das Immobilisierungsmittel (16) mehrere vorgeformte Faltbereiche (54) umfasst,
wobei die mehreren vorgeformten Faltbereiche (54) zum Verformen unter Anwendung einer Kraft, wenn das Mittel (16) in einen Kanal (30) der Insektenfalle (2) gebracht wird, ausgelegt sind, und wobei die mehreren vorgeformten Faltbereiche (54) zum Verformen in einem Bereich der Tröge (31) und des Peak (36), wenn des Mittel in den Kanal (30) gebracht wird, ausgelegt sind,
wobei die Baugruppe ferner mindestens ein Immobilisierungsmittel (16) umfasst.

10. Verfahren zum Montieren einer Insektenfalle (2), wobei das Verfahren das Einführen eines Immobilisierungsmittels (16), zum Immobilisieren und Festhalten von Insekten, in einen Kanal (30) eines Körpers (4) umfasst, wobei das Immobilisierungsmittel (16) sich entlang mehreren vorgeformten Faltbereichen (54) unter Anwendung einer Kraft verformt, die während des Einführens in den Kanal ausgeübt wird,
und wobei sich die mehreren vorgeformten Faltbereiche (54) in einem Bereich der Tröge (31) und des Peak (36) verformen, wenn das Mittel in den Kanal (30) gebracht wird.

## Revendications

1. Piège à insectes (2) comprenant un corps (4) et un moyen d'immobilisation (16) pour immobiliser et retenir des insectes, le moyen d'immobilisation (16) comprenant une pluralité de régions de pliage préformées (54), la pluralité de régions de pliage préformées (54) étant conçues pour se déformer sous l'effet de l'application d'une force, de préférence d'une force agissant vers le bas, lorsque ledit moyen d'immobilisation (16) est placé dans un canal (30) du piège à insectes (2), dans lequel le canal (30) comprend deux sections de canal, lesdites sections étant situées de manière sensiblement symétrique à l'opposé l'une de l'autre sur le piège à insectes (2), et dans lequel les sections de canal comprennent une entrée, un premier creux (31), un sommet (36), un deuxième creux (31) et une sortie,
et dans lequel la pluralité de régions de pliage préformées sont conçues pour se déformer dans une région des creux (31) et du somment (36), lorsque ledit moyen d'immobilisation (16) est placé dans le canal (30).

2. Piège à insectes selon la revendication 1, dans lequel le moyen d'immobilisation (16) comprend un axe longitudinal.

3. Piège à insectes selon la revendication 1 ou 2, dans lequel la pluralité de régions de pliage préformées (54) s'étendent sensiblement parallèlement à l'axe longitudinal du moyen d'immobilisation (16).

4. Piège à insectes selon l'une quelconque des revendications précédentes, dans lequel les régions de pliage préformées (54) comprennent des perforations prédécoupées.

5. Piège à insectes selon l'une quelconque des revendications précédentes, dans lequel le moyen d'immobilisation comprend une première paroi latérale, une deuxième paroi latérale, une troisième paroi latérale et une quatrième paroi latérale, les première et deuxième parois latérales étant sensiblement parallèles l'une à l'autre, et les troisième et quatrième parois latérales étant sensiblement parallèles l'une à l'autre.

6. Piège à insectes selon l'une quelconque des revendications précédentes, dans lequel une entaille (50) est prévue dans la première paroi latérale, une première découpure (46) est prévue dans la troisième paroi latérale et une deuxième découpure (46) est prévue sur la quatrième paroi latérale.

7. Piège à insectes selon l'une quelconque des revendications précédentes, dans lequel le moyen d'immobilisation (16) est sensiblement symétrique par rapport à un premier axe.

8. Moyen d'immobilisation pour un piège à insectes, le moyen d'immobilisation comprenant six régions de pliage préformées (54),
dans lequel :
une première région de pliage préformée se trouve sensiblement à une distance comprise entre 20 et 30 mm d'une première paroi latérale du moyen d'immobilisation ;
une deuxième région de pliage préformée se trouve sensiblement à une distance comprise entre 70 et 80 mm de la première paroi latérale ;
une troisième région de pliage préformée se trouve sensiblement à une distance comprise entre 145 et 155 mm de la première paroi latérale ;
une quatrième région de pliage préformée se trouve sensiblement à une distance comprise entre 190 et 210 mm de la première paroi latérale ;
une cinquième région de pliage préformée se trouve sensiblement à une distance comprise entre 240 et 260 mm de la première paroi latérale ; et
une sixième région de pliage préformée se trouve sensiblement à une distance comprise entre 320 et 350 mm de la première paroi latérale,
dans lequel le moyen d'immobilisation (16) est configuré pour se déformer au niveau des six régions de pliage préformées afin de créer un sommet (56) faisant saillie vers l'extérieur à partir du moyen d'immobilisation (16) et des premier et second creux (58) s'étendant vers l'arrière à partir du moyen d'immobilisation.

9. Ensemble comprenant un piège à insectes comprenant un corps (4) pour recevoir un moyen d'immobilisation (16) pour retenir des insectes, le moyen d'immobilisation (16) comprenant une pluralité de régions de pliage préformées (54), la pluralité de régions de pliage préformées (54) étant conçues pour se déformer sous l'effet de l'application d'une force, lorsque ledit moyen (16) est placé dans un canal (30) du piège à insectes (2),
dans lequel le canal (30) comprend deux sections de canal, lesdites sections étant situées de manière sensiblement symétrique à l'opposé l'une de l'autre sur le piège à insectes, et dans lequel les sections de canal comprennent une entrée, un premier creux (31), un sommet (36), un deuxième creux (31) et une sortie,
et dans lequel la pluralité de régions de pliage préformées (54) sont conçues pour se déformer dans une région des creux (31) et du sommet (36), lorsque ledit moyen est placé dans le canal (30), l'ensemble comprenant en outre au moins un moyen d'immobilisation (16).

10. Procédé d'assemblage d'un piège à insectes (2), le procédé comprenant l'insertion d'un moyen d'immobilisation (16), pour immobiliser et retenir des insectes, à l'intérieur d'un canal (30) d'un corps (4), le moyen d'immobilisation (16) se déformant le long d'une pluralité de régions de pliage préformées (54) sous l'effet de l'application d'une force appliquée pendant l'insertion à l'intérieur du canal,
dans lequel le canal (30) comprend deux sections de canal, lesdites sections étant situées de manière sensiblement symétrique à l'opposé l'une de l'autre sur le piège à insectes, et dans lequel les sections de canal comprennent une entrée, un premier creux (31), un sommet (36), un deuxième creux (31) et une sortie,
et dans lequel la pluralité de régions de pliage préformées (54) se déforment dans une région des creux (31) et du sommet (36), lorsque ledit moyen est placé dans le canal (30).
